# EUROPEAN PATENT APPLICATION

(11) **EP 3 930 408 A1**
(43) Date of publication of application: **29.12.2021**
(21) Application number: 20759881.4
(22) Date of filing: 20.01.2020
(51) Int. Cl.: H04W 74/00

(54) **RANDOM ACCESS METHOD AND APPARATUS, TERMINAL AND NETWORK SIDE DEVICE**

(30) Priority: 21.02.2019 CN 201910129808
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHEN, Ningyu, Beijing 100032 (CN); LIU, Yang, Beijing 100032 (CN); LI, Nan, Beijing 100032 (CN); HU, Nan, Beijing 100032 (CN)
(74) Representative: GPI Brevets
(86) International application number: PCT/CN2020/073193
(87) International publication number: WO 2020/168891

(57) **Abstract**

A random access method, a random access device, a terminal and a network-side device are provided, and the method includes: transmitting a first message, where the first message includes a message A for random access, a random access preamble, a message 3 for random access or a first payload; receiving a second message transmitted by a network-side device, where the second message includes a message B for random access, a random access response, a message 4 for random access or a second payload; where the second message further includes indication information, or, the random access response includes the indication information.

## Description

### CROSS-REFERENCE TO RELATED APPLICATION

This application claims priority to Chinese patent application No. 201910129808.2 filed in China on February 21, 2019, a disclosure of which is incorporated herein by reference in its entirety.

### TECHNICAL FIELD

The present disclosure relates to the field of communication technologies, and in particular, relates to a random access method, a random access device, a terminal, and a network-side device.

### BACKGROUND

In the related art, the contention-based random access procedure includes a four-step random access and a two-step random access; where the four-step random access includes: a message 1 (MSG1) for a random access preamble, a message 2 (MSG2) for a random access response, a message 3 (MSG3) for uplink transmission, and a message 4 (MSG4) for random access contention resolution; the two-step random access includes: a message A (MSG A) and a message B (MSG B), where MSG A may be MSG1 + MSG3, and MSG B may be MSG2+ MSG4.

Specifically, the two-step random access includes: a first message (Message A or MSG A) transmitted by a terminal to a network-side device, and a second message (Message B or MSG B) which is a random access response and is transmitted by the network-side device to the terminal.

Specifically, the message 1 (MSG1) is a random access preamble; the message 2 (MSG2) is a random access response (RAR); the message 3 (MSG3) is uplink transmission, which may include at least one of an RRC establishment request, or an RRC resume request, or an RRC reestablishment request, or uplink data transmission; the message 4 (MSG4) is a contention conflict resolution, or an RRC establishment message, or an RRC resume message, or an RRC reestablishment message.

After transmitting an MSG A (including MSG 1+MSG 3), a terminal may receive an MSG B (including MSG 2+MSG 4), which is the two-step random access; or the terminal may receive an MSG 2, i.e., the terminal falls back to the four-step random access. MSG B and MSG 2 may both be received within an RAR window; or it is possible that the MSG 2 is received within an RAR window and the MSG 4 is received in other time-frequency resources.

MSG 2 is transmitted first for both the case in which the MSG B is transmitted and the case in which the MSG 2 is transmitted, however, for the case in which the MSG B is transmitted, the MSG 4 would be transmitted following the MSG 2. As a result, after receiving the MSG 2, the terminal does not know whether an MSG 4 would be transmitted subsequently. One possible solution is that, after receiving the MSG 2, the terminal will continue to demodulate to determine whether there is an MSG 4. However, this would result in unnecessary detection performed by the terminal in the case that only the MSG 2 is transmitted by the network side.

### SUMMARY

A purpose of embodiments of the present disclosure is to provide a random access method, a random access device, a terminal, and a network-side device, so as to solve the problem of the unnecessary detection performed by the terminal during the two-step random access in the related art.

In order to solve the above problem, an embodiment of the present disclosure provides a random access method, and the method is performed by a terminal and includes:
transmitting a first message, where the first message includes a message A for random access, a random access preamble, a message 3 for random access or a first payload;
receiving a second message transmitted by a network-side device; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

The method further includes:
continuing, by the terminal, to receive the message 4 in a case that the indication information indicates that the network-side device transmits the message 4; or,
continuing, by the terminal, to receive the message 4 in a case that the indication information indicates the terminal to receive the message 4; or,
continuing, by the terminal, to receive the second payload in a case that the indication information indicates that the network-side device transmits the second payload; or,
continuing, by the terminal, to receive the second payload in a case that the indication information indicates the terminal to receive the second payload.

The method further includes:
falling back, by the terminal, to the four-step random access in a case that the indication information indicates the terminal to transmit the message 3; or,
transmitting, by the terminal, the message 3 to the network-side device in a case that the indication information indicates the terminal to transmit the message 3; or,
transmitting, by the terminal, the first payload to the network-side device in a case that the indication information indicates the terminal to transmit the first payload; or,
falling back, by the terminal, to the four-step random access in a case that the indication information indicates the terminal to transmit the first payload; or,
falling back, by the terminal, to the four-step random access in a case that the indication information indicates the terminal to fall back to the four-step random access; or,
transmitting, by the terminal, the message 3 or the first payload to the network-side device in a case that the indication information indicates the terminal to fall back to the four-step random access.

In a case that the terminal continues to receive the message 4 or the second payload, the method further includes:
transmitting the message 3 or the first payload to the network-side device in a case that the message 4 or the second payload is not received; or,
re-initiating a random access after backing off for a preset time in a case that the message 4 or the second payload is not received.

Subsequent to transmitting the message 3 or the first payload to the network-side device, the method further includes:
receiving the message 4 or the second payload transmitted by the network-side device.

An embodiment the present disclosure further provides a random access method performed by a network-side device, and the method includes:
receiving a first message transmitted by a terminal, where the first message includes a message A for random access, a random access preamble, a message 3 for random access or a first payload;
transmitting a second message to the terminal according to the first message; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

The method further includes:
transmitting the message 4 in a case that the indication information indicates that the network-side device transmits the message 4; or,
transmitting the second payload in a case that the indication information indicates that the network-side device transmits the second payload; or,
transmitting the message 4 in a case that the indication information indicates the terminal to receive the message 4; or,
transmitting the second payload in a case that the indication information indicates the terminal to receive the second payload.

The method further includes:
receiving the message 3 transmitted by the terminal in a case that the indication information indicates the terminal to transmit the message 3; or,
receiving the first payload transmitted by the terminal in a case that the indication information indicates the terminal to transmit the first payload; or,
receiving the message 3 or the first payload transmitted by the terminal in a case that the indication information indicates the terminal to fall back to the four-step random access.

The method further includes: transmitting the message 4 or the second payload to the terminal according to the message 3 or the first payload transmitted by the terminal.

An embodiment of the present disclosure further provides a terminal including a processor and a transceiver. The processor is configured to control the transceiver to perform the following process:
transmitting a first message, where the first message includes a message A for random access, a random access preamble, a message 3 for random access or a first payload;
receiving a second message transmitted by a network-side device; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

The transceiver is further configured to:
continue to receive the message 4 in a case that the indication information indicates that the network-side device transmits the message 4; or,
continue to receive the message 4 in a case that the indication information indicates the terminal to receive the message 4; or,
continue to receive the second payload in a case that the indication information indicates that the network-side device transmits the second payload; or,
continue to receive the second payload in a case that the indication information indicates the terminal to receive the second payload.

The transceiver is further configured to:
fall back to the four-step random access in a case that the indication information indicates the terminal to transmit the message 3; or,
transmit the message 3 to the network-side device in a case that the indication information indicates the terminal to transmit the message 3; or,
transmit the first payload to the network-side device in a case that the indication information indicates the terminal to transmit the first payload; or,
fall back to the four-step random access in a case that the indication information indicates the terminal to transmit the first payload; or,
fall back to the four-step random access in a case that the indication information indicates the terminal to fall back to the four-step random access; or,
transmit the message 3 or the first payload to the network-side device in a case that the indication information indicates the terminal to fall back to the four-step random access.

The transceiver is further configured to:
transmit the message 3 or the first payload to the network-side device in a case that the terminal continues to receive the message 4 or the second payload, and the message 4 or the second payload is not received; or,
re-initiate a random access after backing off for a preset time in a case that the terminal continues to receive the message 4 or the second payload, and the message 4 or the second payload is not received.

The transceiver is further configured to: subsequent to transmitting the message 3 or the first payload to the network-side device, receive the message 4 or the second payload transmitted by the network-side device.

An embodiment of the present disclosure further provides a random access device applied to a terminal, and the device includes:
a first transmitting module, configured to transmit a first message, where the first message includes a message A for random access, a random access preamble, a message 3 for random access or a first payload;
a first reception module, configured to receive a second message transmitted by a network-side device; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

An embodiment of the present disclosure further provides a network-side device including a processor and a transceiver. The processor is configured to control the transceiver to perform the following process:
receiving a first message transmitted by a terminal, where the first message includes a message A for random access, a random access preamble, a message 3 for random access or a first payload;
transmitting a second message to the terminal according to the first message; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

The transceiver is further configured to:
transmit the message 4 in a case that the indication information indicates that the network-side device transmits the message 4; or,
transmit the second payload in a case that the indication information indicates that the network-side device transmits the second payload; or,
transmit the message 4 in a case that the indication information indicates the terminal to receive the message 4; or,
transmit the second payload in a case that the indication information indicates the terminal to receive the second payload.

The transceiver is further configured to:
receive the message 3 transmitted by the terminal in a case that the indication information indicates the terminal to transmit the message 3; or,
receive the first payload transmitted by the terminal in a case that the indication information indicates the terminal to transmit the first payload; or,
receive the message 3 or the first payload transmitted by the terminal in a case that the indication information indicates the terminal to fall back to the four-step random access.

The transceiver is further configured to: transmit the message 4 or the second payload to the terminal according to the message 3 or the first payload transmitted by the terminal.

An embodiment of the present disclosure further provides a random access device applied to a network-side device, and the device includes:
a second reception module, configured to receive a first message transmitted by a terminal, where the first message includes a message A for random access, a random access preamble, a message 3 for random access or a first payload;
a second transmitting module, configured to transmit a second message to the terminal according to the first message; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

An embodiment of the present disclosure further provides a computer readable storage medium having a computer program stored thereon, where the computer program is configured to be executed by a processor to implement steps of the random access method as described above; or the computer program is configured to be executed by a processor to implement steps of the random access method as described above.

The above technical solutions of the present disclosure have at least the following beneficial effects.

In the random access method, the random access device, the terminal and the network-side device in embodiments of the present disclosure, since the indication information is added in the second message or the random access response transmitted by the network side, the terminal decides whether to fall back to the four-step random access after receiving the second message, thereby avoiding the unnecessary detection performed by the terminal after receiving the second message.

### BRIEF DESCRIPTION OF THE DRAWINGS

Fig.1 is a first flowchart of steps of a random access method provided in an embodiment of the present disclosure;
Fig.2 is a second flowchart of steps of a random access method provided in an embodiment of the present disclosure;
Fig.3 is a schematic diagram of signaling interaction of a random access method provided in an embodiment of the present disclosure;
Fig.4 is a schematic structural diagram illustrating a terminal provided in an embodiment of the present disclosure;
Fig.5 is a first schematic structural diagram illustrating a random access device provided in an embodiment of the present disclosure;
Fig.6 is a schematic structural diagram illustrating a network-side device provided in an embodiment of the present disclosure;
Fig.7 is a second schematic structural diagram illustrating a random access device provided in an embodiment of the present disclosure.

### DETAILED DESCRIPTION

In order to make the technical problems to be solved, technical solutions and advantages of the present disclosure more clear, the present disclosure will be described in detail below with reference to drawings and specific embodiments.

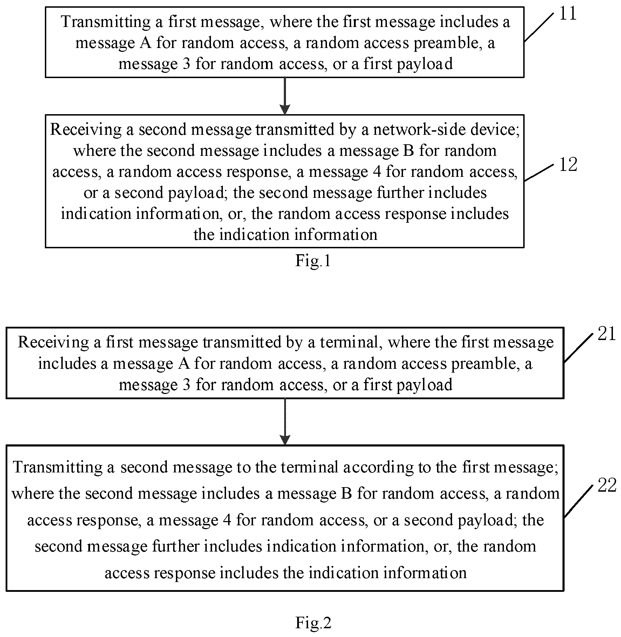

As shown in Fig.1, an embodiment of the present disclosure provides a random access method applied to a terminal, and the random access method includes Step 11 and Step 12.

Step 11, transmitting a first message, where the first message includes a message A for random access, a random access preamble, a message 3 for random access, or a first payload.

Step 12, receiving a second message transmitted by a network-side device; where the second message includes a message B for random access, a random access response, a message 4 for random access, or a second payload. The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

Optionally, the indication information may also indicate the terminal to transmit a message 5 (i.e., MSG5) for random access, and the message 5 may include an RRC establishment complete message or an RRC resume complete message.

It should be noted that the first message is the message A (MSG A) in the two-step random access, and the message A may include a preamble and a first payload. The message A is transmitted by the terminal to the network-side device.

The preamble in the first message may also be the message 1 (MSG 1).

The first payload in the first message may also be the message 3 (MSG 3), and the payload may include at least one of a UE ID, a connection establishment request, a connection resume request, a connection reestablishment request, or a data packet. The UE ID may be a resume ID (i.e., resume id), a generated random value, or a UE identifier such as a TMSI, or S-TMSI, or a part of ng-5G-S-TMSI, or globally unique temporary identifier (GUTI) or cell-radio network temporary identifier (C-RNTI).

The second message is the message B (MSG B) in the two-step random access, and includes a random access response and optionally the second payload. The second message is transmitted by the network-side device to the terminal. The second message may include a message 2 (MSG2) and/or a message 4 (MSG 4), the message 2 is the random access response, and the message 4 is the second payload.

As an optional embodiment, the indication information may be carried in the random access response, i.e., through a media access control (MAC) layer, e.g., the indication information is carried through a common control channel (CCCH); or the indication information may also be carried in the second message, i.e., through a physical layer, e.g., the indication information is carried through a physical downlink shared channel (PDSCH) or a physical downlink control channel (PDCCH).

It should be noted that, the reason for fall-backing from the two-step random access to the four-step random access (or the network-side device does not transmit the message 4 after the first message is received) is as follows.
1. The network side receives and demodulates the MSG A to obtain a preamble, but fails to successfully obtain the MSG 3. The network side has to transmit the MSG 2 to the terminal, to obtain the MSG 3 again.
2. Since resources (preamble/time-frequency resources) of the MSG 1 that are issued by the network side correspond to time-frequency resources of the uplink transmission of the MSG 3, if the resources of the MSG 1 are in conflict, then the time-frequency resources of the uplink transmission of the MSG 3 are definitely in conflict, resulting that the network side fails to parse the uplink resources of the MSG 3, so that the contention conflict may not be resolved, and it is necessary to fall back to the four-step random access to resolve the conflict in the contention-based random access.
3. The network receives the MSG A (including MSG 1 and MSG 3), where the MSG 3 includes an RRC resume request, and a resume ID is included in the request. However, for some reasons, the network side fails to resume the terminal context based on the resume ID and cannot complete the RRC resume. The network side transmits MSG 2 or MSG B to the terminal to reassign the UE ID, and the MSG 2 may include a temporary C-RNTI. Having received the temporary C-RNTI, the terminal carries the temporary C-RNTI in the MSG3.
4. The terminal receives a fallback indication message transmitted by the network side, which indicates the terminal to fall back to the four-step random access.

As an optional embodiment, the method further includes:
continuing, by the terminal, to receive the message 4 in a case that the indication information indicates that the network-side device transmits the message 4; or,
continuing, by the terminal, to receive the message 4 in a case that the indication information indicates the terminal to receive the message 4; or,
continuing, by the terminal, to receive the second payload in a case that the indication information indicates that the network-side device transmits the second payload; or,
continuing, by the terminal, to receive the second payload in a case that the indication information indicates the terminal to receive the second payload.

It should be noted that, the MSG2 and/or the MSG4 constitutes the MSG B in the two-step random access. The MSG2 is a random access response (RAR); the MSG4 is a contention conflict resolution message or a connection establishment complete message (such as an RRC establishment message, or an RRC resume message, or an RRC reestablishment message).

Optionally, in a case that the terminal continues to receive the message 4 or the second payload, the method further includes:
transmitting the message 3 or the first payload to the network-side device in a case that the message 4 or the second payload is not received; or,
re-initiating a random access after backing off for a preset time in a case that the message 4 or the second payload is not received. In order to save time, the preset time for backoff is a fall-back time issued by the network-side.

As another optional embodiment, the method further includes:
falling back, by the terminal, to the four-step random access in a case that the indication information indicates the terminal to transmit the message 3; or,
transmitting, by the terminal, the message 3 to the network-side device in a case that the indication information indicates the terminal to transmit the message 3; or,
transmitting, by the terminal, the first payload to the network-side device in a case that the indication information indicates the terminal to transmit the first payload; or,
falling back, by the terminal, to the four-step random access in a case that the indication information indicates the terminal to transmit the first payload; or,
falling back, by the terminal, to the four-step random access in a case that the indication information indicates the terminal to fall back to the four-step random access; or,
transmitting, by the terminal, the message 3 or the first payload to the network-side device in a case that the indication information indicates the terminal to fall back to the four-step random access.

Optionally, subsequent to transmitting the message 3 or the first payload to the network-side device, the method further includes: receiving the message 4 or the second payload transmitted by the network-side device.

In summary, after transmitting the MSG A, the terminal receives the indication information included in the MSG 2, or the indication information included in the MSG B, and the terminal transmits the MSG 3 to the network side according to the indication information, where the MSG 3 carries the UE ID carried in the MSG 2.

In order to describe the random access method provided in the present disclosure more thoroughly, the possible behaviors of the terminal after transmitting the MSG A are described below.

If the terminal has received a random access response (i.e., MSG 2) transmitted by the network side that includes a random access preamble ID (i.e., RAPID) but does not include a UE ID (e.g., C-RNTI), the terminal backs off for a period of time and then re-initiates the random access, and the period of time is a back-off time issued by the network (the network side saves time).

If the terminal has received a random access response (i.e., MSG 2) transmitted by the network side that includes an RAPID and a UE ID (e.g., C-RNTI), the terminal continues to try to receive MSG4; if the MSG4 is not received by the terminal, the terminal transmits the MSG 3 scrambled with the C-RNTI, or the terminal backs off for a period of time and then re-initiates the random access, and the period of time is a back-off time issued by the network; if the MSG 4 is received by the terminal, the random access conflict is resolved.

If the terminal has received the RAPID, C-RNTI and the indication information transmitted by the network side, if the indication information indicates that there is no MSG4, the terminal transmits the MSG 3 scrambled with C-RNTI; if the indication information indicates that there is the MSG4, but the terminal fails to receive the MSG4, the terminal scrambles the MSG 3 by using C-RNTI, or uses the MSG 3 to carry C-RNTI information, or uses C-RNTI to address the MSG 3, or the terminal backs off for a period of time and then re-initiates the random access; if the indication information indicates that there is the MSG 4, and the MSG 4 is received by the terminal, the random access conflict is resolved.

In summary, in the embodiment of the present disclosure, since the indication information is added in the second message or the random access response transmitted by the network side, the terminal decides whether to fall back to the four-step random access after receiving the second message, thereby avoiding the unnecessary detection performed by the terminal after receiving the second message.

As shown in Fig.2, an embodiment the present disclosure further provides a random access method performed by a network-side device, and the method includes Step 21 and Step 22.

Step 21, receiving a first message transmitted by a terminal, where the first message includes a message A for random access, a random access preamble, a message 3 for random access or a first payload.

Step 22, transmitting a second message to the terminal according to the first message; where the second message includes a message B for random access, a random access response, a message 4 for random access, or a second payload. The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

Optionally, the indication information may also indicate the terminal to transmit a message 5 (i.e., MSG5) for random access, and the message 5 may include an RRC establishment complete message or an RRC resume complete message.

It should be noted that, the first message is a message A (MSG A) in a two-step random access, and the message A may include a preamble and a first payload. The message A is transmitted by the terminal to the network-side device.

The preamble in the first message may also be a message 1 (MSG 1).

The first payload in the first message may also be a message 3 (MSG 3), and the payload may include at least one of a UE ID, a connection establishment request, a connection resume request, a connection reestablishment request, or a data packet. The UE ID may be a resume ID (i.e., resume id), a generated random value or a UE identifier such as a TMSI, or S-TMSI, or a part of ng-5G-S-TMSI, or GUTI or C-RNTI.

The second message is a message B (MSG B) in the two-step random access, and includes a random access response and optionally the second payload. The second message is transmitted by the network-side device to the terminal. The second message may include a message 2 (MSG 2) and/or a message 4 (MSG 4), the message 2 is the random access response, and the message 4 is the second payload.

As an optional embodiment, the indication information may be carried in the random access response, i.e., through a media access control (MAC) layer, e.g., the indication information is carried through a common control channel (CCCH); or the indication information may also be carried in the second message, i.e., through a physical layer, e.g., the indication information is carried through a physical downlink shared channel (PDSCH) or a physical downlink control channel (PDCCH).

It should be noted that, the reason for falling-back from the two-step random access to the four-step random access (or the network-side device does not transmit the message 4 after the first message is received) is as follows.
1. The network side receives and demodulates the MSG A to obtain a preamble, but fails to successfully obtain the MSG 3. The network side has to transmit the MSG 2 to the terminal, to obtain the MSG 3 again.
2. Since resources (preamble/time-frequency resources) of the MSG 1 that are issued by the network side correspond to time-frequency resources of the uplink transmission of the MSG 3, if the resources of the MSG 1 are in conflict, then the time-frequency resources of the uplink transmission of the MSG 3 are definitely in conflict, resulting that the network side fails to parse the uplink resources of the MSG 3, so that the contention conflict may not be resolved, and it is necessary to fall back to the four-step random access to resolve the conflict in the contention-based random access.
3. The network receives the MSG A (including MSG 1 and MSG 3), where the MSG 3 includes an RRC resume request, and a resume ID is included in the request. However, for some reasons, the network side fails to resume the terminal context based on the resume ID and cannot complete the RRC resume. The network side transmits MSG 2 or MSG B to the terminal to reassign the UE ID, and the MSG 2 may include a temporary C-RNTI. Having received the temporary C-RNTI, the terminal carries the temporary C-RNTI in the MSG3.
4. The terminal receives a fallback indication message transmitted by the network side, which indicates the terminal to fall back to the four-step random access.

As an optional embodiment, the method further includes: transmitting the message 4 in a case that the indication information indicates that the network-side device transmits the message 4; or, transmitting the second payload in a case that the indication information indicates that the network-side device transmits the second payload; or, transmitting the message 4 in a case that the indication information indicates the terminal to receive the message 4; or, transmitting the second payload in a case that the indication information indicates the terminal to receive the second payload.

It should be noted that, the MSG2 and/or the MSG4 constitutes the MSG B in the two-step random access. The MSG2 is a random access response (RAR); the MSG4 is a contention conflict resolution message or a connection establishment complete message (such as an RRC establishment message, or an RRC resume message, or an RRC reestablishment message).

Optionally, the network side transmits the message 4, but the terminal fails to receive the message 4, then the terminal re-transmits the message 3 to the network-side device or re-initiates a random access after backing off for a preset time.

As another optional embodiment, the method further includes: receiving the message 3 transmitted by the terminal in a case that the indication information indicates the terminal to transmit the message 3; or, receiving the first payload transmitted by the terminal in a case that the indication information indicates the terminal to transmit the first payload; or, receiving the message 3 or the first payload transmitted by the terminal in a case that the indication information indicates the terminal to fall back to the four-step random access.

Optionally, the method further includes: transmitting the message 4 or the second payload to the terminal according to the message 3 or the first payload transmitted by the terminal.

In summary, after the network-side device receives the MSG A, the network-side device transmits the MSG B or the MSG 2 to the terminal; the MSG 2 includes the indication information, or the MSG B includes the indication information, and the terminal transmits the MSG 3 to the network side according to the indication information, and the MSG 3 carries the UE ID carried in the MSG 2; after the network-side device receives the MSG 3 transmitted by the terminal, the network-side device transmits the MSG 4 to the terminal.

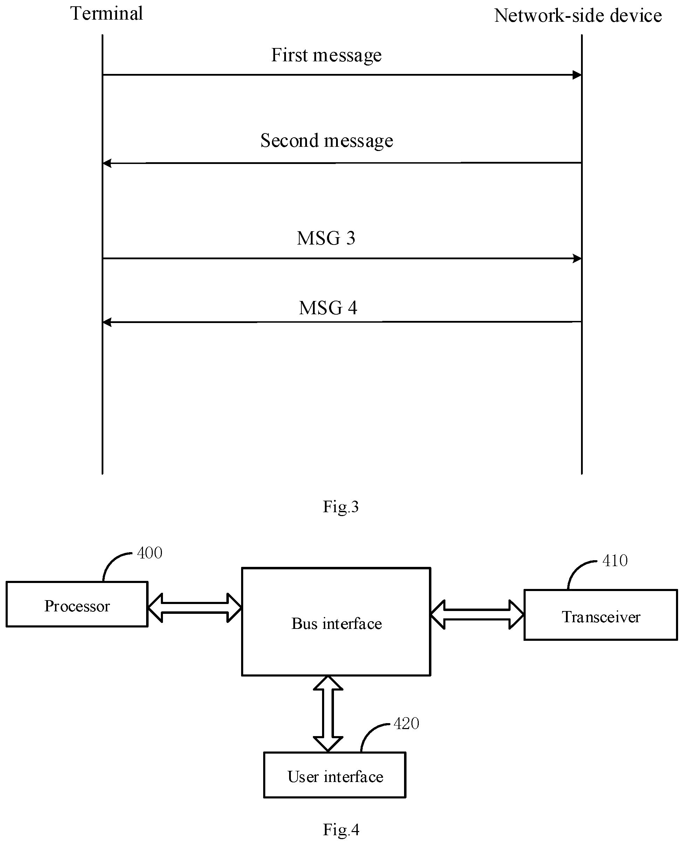

In order to describe in more detail the random access method provided in embodiments of the present disclosure, a complete random access procedure is described below with reference to Fig.3.

Step 1, the terminal transmits a first message (i.e., MSG A), including a random access preamble and a data field, to the network-side device. The data field may include one or more of a UE ID (terminal ID), a reason value, or a data packet.

If the terminal is currently in an idle state, the UE ID may be a temporary mobile subscriber identity (TMSI) or a subscriber concealed identifier (SUCI), and the reason value may be 'RRC establishment request'.

If the terminal is in an inactive state, the UE ID may be the resume ID and the reason value may be 'RRC resume request'.

If the terminal is in a connected state, the UE ID may be C-RNTI. It is possible that the reason value is not carried. The random access is used to obtain uplink time synchronization (carried by MSG 2 or MSG B).

The data packet is data information that may be reported along with the MSG A.

Step 2, the network-side device feeds the second message back to the terminal, the second message includes the MSG 2 and the indication information, or the second message includes the MSG 2, where the MSG 2 includes the indication information. The MSG 2 may also include a UE ID and timing synchronization information.

The indication information is used to indicate the terminal to transmit MSG 3, or to indicate that the information is not followed by MSG 4, or to indicate the terminal to fall back to the four-step random access.

The UE ID carried in MSG 2 may be T-C-RNTI if the UE in the idle state initiates the random access.

The UE ID carried in MSG 2 may be a new resume id if the UE in the inactive state initiates the random access.

The UE ID carried in MSG 2 may be T-C-RNTI if the UE in the connected state initiates the random access.

Step 3, after receiving the MSG 2 carrying the indication information or the second message carrying the indication information, the terminal transmits the MSG 3 to the network side, where the MSG 3 carries a UE ID and a reason value.

The UE ID may be T-C-RNTI or S-TMSI and the reason value may be 'RRC establishment request', if the terminal in the idle state initiates the random access.

The UE ID may be a new resume id and the reason value may be 'RRC resume request', if the terminal in the inactive state initiates the random access.

The UE ID may be T-C-RNTI or S-TMSI, if the terminal in the connected state initiates the random access.

Step 4, after receiving the MSG 3, the network side transmits the MSG 4 to the terminal, where the MSG 4 carries the UE ID, and an RRC message.

The UE ID may be C-RNTI and the reason value may be 'RRC establishment request', if the terminal in the idle state initiates the random access.

The UE ID may be a new resume id and the reason value may be 'RRC resume request', if the terminal in the inactive state initiates the random access.

The UE ID may be C-RNTI if the terminal in the connected state initiates the random access.

In summary, in the embodiment of the present disclosure, since the indication information is added in the second message or the random access response transmitted by the network side, the terminal decides whether to fall back to the four-step random access after receiving the second message, thereby avoiding the unnecessary detection performed by the terminal after receiving the second message.

As shown in Fig.4, an embodiment of the present disclosure further provides a terminal including a processor 400 and a transceiver 410. The terminal also includes a user interface 420, and the processor 400 is configured to control the transceiver 410 to perform the following process: transmitting a first message, where the first message includes a message A for random access, a random access preamble, a message 3 for random access or a first payload; receiving a second message transmitted by a network-side device; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

Optionally, in the embodiment of the present disclosure, the transceiver 410 is further configured to:
continue to receive the message 4 in a case that the indication information indicates that the network-side device transmits the message 4; or,
continue to receive the message 4 in a case that the indication information indicates the terminal to receive the message 4; or,
continue to receive the second payload in a case that the indication information indicates that the network-side device transmits the second payload; or,
continue to receive the second payload in a case that the indication information indicates the terminal to receive the second payload.

Optionally, in the embodiment of the present disclosure, the transceiver 410 is further configured to:
fall back to the four-step random access in a case that the indication information indicates the terminal to transmit the message 3; or,
transmit the message 3 to the network-side device in a case that the indication information indicates the terminal to transmit the message 3; or,
transmit the first payload to the network-side device in a case that the indication information indicates the terminal to transmit the first payload; or,
fall back to the four-step random access in a case that the indication information indicates the terminal to transmit the first payload; or,
fall back to the four-step random access in a case that the indication information indicates the terminal to fall back to the four-step random access; or,
transmit the message 3 or the first payload to the network-side device in a case that the indication information indicates the terminal to fall back to the four-step random access.

Optionally, in the embodiment of the present disclosure, the transceiver 410 is further configured to: transmit the message 3 or the first payload to the network-side device in a case that the terminal continues to receive the message 4 or the second payload, and the message 4 or the second payload is not received; or, re-initiate a random access after backing off for a preset time in a case that the terminal continues to receive the message 4 or the second payload, and the message 4 or the second payload is not received.

Optionally, in the embodiment of the present disclosure, the transceiver 410 is further configured to: subsequent to transmitting the message 3 or the first payload to the network-side device, receive the message 4 or the second payload transmitted by the network-side device.

In summary, in the embodiment of the present disclosure, since the indication information is added in the second message or the random access response transmitted by the network side, the terminal decides whether to fall back to the four-step random access after receiving the second message, thereby avoiding the unnecessary detection performed by the terminal after receiving the second message.

It should be noted that, the terminal provided in the embodiment of the present disclosure is a terminal capable of implementing the above-mentioned random access method, and all embodiments of the above-mentioned random access method are applicable to the terminal, and may achieve the same or similar beneficial effects.

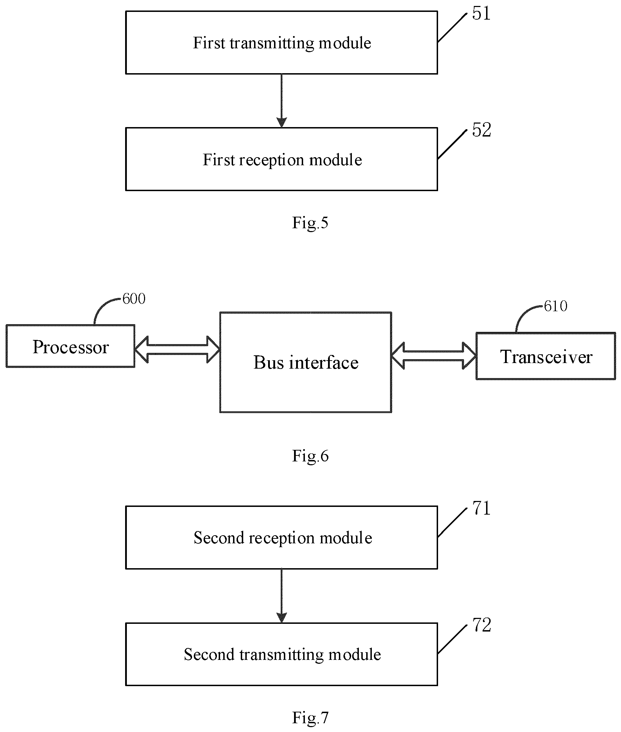

As shown in Fig.5, an embodiment of the present disclosure further provides a random access device applied to a terminal, and the device includes: a first transmitting module 51, configured to transmit a first message, where the first message includes a message A for random access, a random access preamble, a message 3 for random access or a first payload; a first reception module 52, configured to receive a second message transmitted by a network-side device; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

Optionally, in the embodiment of the present disclosure, the device further includes: a third reception module, configured to:
continue to receive the message 4 in a case that the indication information indicates that the network-side device transmits the message 4, or,
continue to receive the message 4 in a case that the indication information indicates the terminal to receive the message 4, or,
continue to receive the second payload in a case that the indication information indicates that the network-side device transmits the second payload, or,
continue to receive the second payload in a case that the indication information indicates the terminal to receive the second payload.

Optionally, in the embodiment of the present disclosure, the device further includes: a first processing module, configured to:
fall back to the four-step random access in a case that the indication information indicates the terminal to transmit the message 3, or,
transmit the message 3 to the network-side device in a case that the indication information indicates the terminal to transmit the message 3, or,
transmit the first payload to the network-side device in a case that the indication information indicates the terminal to transmit the first payload, or,
fall back to the four-step random access in a case that the indication information indicates the terminal to transmit the first payload, or,
fall back to the four-step random access in a case that the indication information indicates the terminal to fall back to the four-step random access, or,
transmit the message 3 or the first payload to the network-side device in a case that the indication information indicates the terminal to fall back to the four-step random access.

Optionally, in the embodiment of the present disclosure, the device further includes: a second processing module, configured to:
transmit the message 3 or the first payload to the network-side device in a case that the message 4 or the second payload is not received, or,
re-initiate a random access after backing off for a preset time in a case that the message 4 or the second payload is not received.

Optionally, in the embodiment of the present disclosure, the device further includes: a fourth reception module, configured to, subsequent to transmitting the message 3 or the first payload to the network-side device, receive the message 4 or the second payload transmitted by the network-side device.

In summary, in the embodiment of the present disclosure, since the indication information is added in the second message or the random access response transmitted by the network side, the terminal decides whether to fall back to the four-step random access after receiving the second message, thereby avoiding the unnecessary detection performed by the terminal after receiving the second message.

It should be noted that, the random access device provided in the embodiment of the present disclosure is a device capable of implementing the above-mentioned random access method, and all embodiments of the above-mentioned random access method are applicable to the device, and may achieve the same or similar beneficial effects.

An embodiment of the present disclosure also provides a computer readable storage medium, a computer program is stored on the computer readable storage medium, and the program is executed by a processor to implement various processes in the embodiments of the random access method as described above, and the same technical effect may be achieved, which will not be repeated herein to avoid repetition. The computer readable storage medium may be, for example, a read-only memory (ROM), a random access memory (RAM), a magnetic disk or an optical disc, etc.

As shown in Fig.6, an embodiment of the present disclosure further provides a network-side device including a processor 600 and a transceiver 610. The processor 600 is configured to control the transceiver 610 to perform the following process: receiving a first message transmitted by a terminal, where the first message includes a message A for random access, a random access preamble, a message 3 for random access or a first payload; transmitting a second message to the terminal according to the first message; where the second message includes a message B for random access, a random access response, a message 4 for random access or a second payload.

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

Optionally, in the embodiment of the present disclosure, the transceiver 610 is further configured to:
transmit the message 4 in a case that the indication information indicates that the network-side device transmits the message 4; or,
transmit the second payload in a case that the indication information indicates that the network-side device transmits the second payload; or,
transmit the message 4 in a case that the indication information indicates the terminal to receive the message 4; or,
transmit the second payload in a case that the indication information indicates the terminal to receive the second payload.

Optionally, in the embodiment of the present disclosure, the transceiver 610 is further configured to:
receive the message 3 transmitted by the terminal, in a case that the indication information indicates the terminal to transmit the message 3; or,
receive the first payload transmitted by the terminal, in a case that the indication information indicates the terminal to transmit the first payload; or,
receive the message 3 or the first payload transmitted by the terminal, in a case that the indication information indicates the terminal to fall back to the four-step random access.

Optionally, in the embodiment of the present disclosure, the transceiver 610 is further configured to: transmitting the message 4 or the second payload to the terminal according to the message 3 or the first payload transmitted by the terminal.

In summary, in the embodiment of the present disclosure, since the indication information is added in the second message or the random access response transmitted by the network side, the terminal decides whether to fall back to the four-step random access after receiving the second message, thereby avoiding the unnecessary detection performed by the terminal after receiving the second message.

It should be noted that, the network-side device provided in the embodiment of the present disclosure is a network-side device capable of implementing the above-mentioned random access method, and all the embodiments of the above-mentioned random access method are applicable to the network-side device, and may achieve the same or similar beneficial effects.

As shown in Fig.7, an embodiment the present disclosure further provides a random access device applied to a network-side device, and the device includes: a second reception module 71, configured to receive a first message transmitted by a terminal, where the first message includes a message A for random access, a random access preamble, a message 3 for random access or a first payload; a second transmitting module 72, configured to transmit a second message to the terminal according to the first message; where the second message includes a message B for random access, a random access response, a message 4 for random access or a second payload;

The second message further includes indication information, or, the random access response includes the indication information; the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

Optionally, in the embodiment of the present disclosure, the device further includes: a third processing module, configured to:
transmit the message 4 in a case that the indication information indicates that the network-side device transmits the message 4, or,
transmit the second payload in a case that the indication information indicates that the network-side device transmits the second payload, or,
transmit the message 4 in a case that the indication information indicates the terminal to receive the message 4, or,
transmit the second payload in a case that the indication information indicates the terminal to receive the second payload.

Optionally, in the embodiment of the present disclosure, the device further includes: a fourth processing module, configured to:
receive the message 3 transmitted by the terminal, in a case that the indication information indicates the terminal to transmit the message 3, or,
receive the first payload transmitted by the terminal, in a case that the indication information indicates the terminal to transmit the first payload, or,
receive the message 3 or the first payload transmitted by the terminal, in a case that the indication information indicates the terminal to fall back to the four-step random access.

Optionally, in the embodiment of the present disclosure, the device further includes: a fifth processing module, configured to transmit the message 4 or the second payload to the terminal according to the message 3 or the first payload transmitted by the terminal.

In summary, in the embodiment of the present disclosure, since the indication information is added in the second message or the random access response transmitted by the network side, the terminal decides whether to fall back to the four-step random access after receiving the second message, thereby avoiding the unnecessary detection performed by the terminal after receiving the second message.

It should be noted that, the random access device provided in the embodiment of the present disclosure is a device capable of implementing the above-mentioned random access method, and all embodiments of the above-mentioned random access method are applicable to the device, and may achieve the same or similar beneficial effects.

An embodiment of the present disclosure also provides a computer readable storage medium, the computer program is stored on the computer readable storage medium, and the program is executed by a processor to implement various processes in the embodiments of the random access method described as above, and the same technical effect may be achieved, which will not be repeated herein to avoid repetition. The computer readable storage medium may be, for example, a read-only memory (ROM), a random access memory (RAM), a magnetic disk or an optical disc, etc.

Those skilled in the art will appreciate that an embodiment of the present disclosure may be provided as a method, a system or a computer program product. Accordingly, the present disclosure may take the form of an entirely hardware embodiment, an entirely software embodiment or an embodiment combining software and hardware aspects. Moreover, the present disclosure may take the form of a computer program product implemented on one or more computer readable storage media (including but not limit to magnetic disk storage and optical storage etc.) including computer usable program codes.

The present disclosure is described with reference to flowcharts and/or block diagrams of methods, devices (systems) and computer program products according to an embodiment of the disclosure. It will be understood that each flow and/or block of flowcharts and/or block diagrams and a combination of the flows and/or blocks in the flowcharts and/or block diagrams may be implemented by computer program instructions. These computer program instructions can be provided to a processor of a general purpose computer, a special purpose computer, an embedded processor or other programmable data processing device to produce a machine, so that the instructions executed by a processor of a computer or other programmable data processing device produce a device for implementing the functions designated in one or more flows of the flowcharts and/or in one or more blocks.

The computer program instructions may also be stored in a computer readable storage medium that can direct a computer or other programmable data processing device to operate in a particular manner, such that instructions stored in the computer readable storage medium produce an article of manufacture including the instruction device, and the instruction device implements the functions designated in one or more flows of the flowcharts and/or in one or more blocks of the block diagrams.

These computer program instructions may also be loaded onto a computer or other programmable data processing device such that a series of operational steps are performed on the computer or other programmable device to produce computer-implemented processing, such that the instructions executed on a computer or other programmable device provide steps for implementing the functions designated in one or more flows of the flowcharts and/or in one or more blocks of the block diagrams.

The descriptions above are optional implementations of the disclosure, it should be noted, those skilled in the art may make various improvements and embellishments without departing from principles described in the present disclosure, and the various improvements and embellishments shall be deemed as falling within the scope of the present disclosure.

## Claims

1. A random access method, performed by a terminal, comprising:
transmitting a first message, wherein the first message comprises a message A for random access, a random access preamble, a message 3 for random access or a first payload;
receiving a second message transmitted by a network-side device, wherein the second message comprises a message B for random access, a random access response, a message 4 for random access or a second payload; wherein the second message further comprises indication information, or, the random access response comprises the indication information;
the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

2. The random access method according to claim 1, further comprising:
continuing, by the terminal, to receive the message 4 in a case that the indication information indicates that the network-side device transmits the message 4; or,
continuing, by the terminal, to receive the message 4 in a case that the indication information indicates the terminal to receive the message 4; or,
continuing, by the terminal, to receive the second payload in a case that the indication information indicates that the network-side device transmits the second payload; or,
continuing, by the terminal, to receive the second payload in a case that the indication information indicates the terminal to receive the second payload.

3. The random access method according to claim 1, further comprising:
falling back, by the terminal, to the four-step random access in a case that the indication information indicates the terminal to transmit the message 3; or,
transmitting, by the terminal, the message 3 to the network-side device in a case that the indication information indicates the terminal to transmit the message 3; or,
transmitting, by the terminal, the first payload to the network-side device in a case that the indication information indicates the terminal to transmit the first payload; or,
falling back, by the terminal, to the four-step random access in a case that the indication information indicates the terminal to transmit the first payload; or,
falling back, by the terminal, to the four-step random access in a case that the indication information indicates the terminal to fall back to the four-step random access; or,
transmitting, by the terminal, the message 3 or the first payload to the network-side device in a case that the indication information indicates the terminal to fall back to the four-step random access.

4. The random access method according to claim 2, wherein in a case that the terminal continues to receive the message 4 or the second payload, the method further comprises:
transmitting the message 3 or the first payload to the network-side device in a case that the message 4 or the second payload is not received; or,
re-initiating a random access after backing off for a preset time in a case that the message 4 or the second payload is not received.

5. The random access method according to claim 3 or 4, wherein subsequent to transmitting the message 3 or the first payload to the network-side device, the method further comprises:
receiving the message 4 or the second payload transmitted by the network-side device.

6. A random access method, performed by a network-side device, comprising:
receiving a first message transmitted by a terminal, wherein the first message comprises a message A for random access, a random access preamble, a message 3 for random access or a first payload;
transmitting a second message to the terminal according to the first message; wherein the second message comprises a message B for random access, a random access response, a message 4 for random access or a second payload;
wherein the second message further comprises indication information, or, the random access response comprises the indication information;
the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

7. The random access method according to claim 6, further comprising:
transmitting the message 4 in a case that the indication information indicates that the network-side device transmits the message 4; or,
transmitting the second payload in a case that the indication information indicates that the network-side device transmits the second payload; or,
transmitting the message 4 in a case that the indication information indicates the terminal to receive the message 4; or,
transmitting the second payload in a case that the indication information indicates the terminal to receive the second payload.

8. The random access method according to claim 6, further comprising:
receiving the message 3 transmitted by the terminal, in a case that the indication information indicates the terminal to transmit the message 3; or,
receiving the first payload transmitted by the terminal, in a case that the indication information indicates the terminal to transmit the first payload; or,
receiving the message 3 or the first payload transmitted by the terminal, in a case that the indication information indicates the terminal to fall back to the four-step random access.

9. The random access method according to claim 8, further comprising:
transmitting the message 4 or the second payload to the terminal according to the message 3 or the first payload transmitted by the terminal.

10. A terminal, comprising a processor and a transceiver, wherein the processor is configured to control the transceiver to perform following process:
transmitting a first message, wherein the first message comprises a message A for random access, a random access preamble, a message 3 for random access or a first payload;
receiving a second message transmitted by a network-side device; wherein the second message comprises a message B for random access, a random access response, a message 4 for random access or a second payload;
wherein the second message further comprises indication information, or, the random access response comprises the indication information;
the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

11. The terminal according to claim 10, wherein the transceiver is further configured to:
continue to receive the message 4 in a case that the indication information indicates that the network-side device transmits the message 4; or,
continue to receive the message 4 in a case that the indication information indicates the terminal to receive the message 4; or,
continue to receive the second payload in a case that the indication information indicates that the network-side device transmits the second payload; or,
continue to receive the second payload in a case that the indication information indicates the terminal to receive the second payload.

12. The terminal according to claim 10, wherein the transceiver is further configured to:
fall back to the four-step random access in a case that the indication information indicates the terminal to transmit the message 3; or,
transmit the message 3 to the network-side device in a case that the indication information indicates the terminal to transmit the message 3; or,
transmit the first payload to the network-side device in a case that the indication information indicates the terminal to transmit the first payload; or,
fall back to the four-step random access in a case that the indication information indicates the terminal to transmit the first payload; or,
fall back to the four-step random access in a case that the indication information indicates the terminal to fall back to the four-step random access; or,
transmit the message 3 or the first payload to the network-side device in a case that the indication information indicates the terminal to fall back to the four-step random access.

13. The terminal according to claim 11, wherein the transceiver is further configured to:
transmit the message 3 or the first payload to the network-side device in a case that the terminal continues to receive the message 4 or the second payload, and the message 4 or the second payload is not received; or,
re-initiate a random access after backing off for a preset time in a case that the terminal continues to receive the message 4 or the second payload, and the message 4 or the second payload is not received.

14. The terminal according to claim 12 or 13, wherein the transceiver is further configured to:
subsequent to transmitting the message 3 or the first payload to the network-side device, receive the message 4 or the second payload transmitted by the network-side device;

15. A random access device, applied to a terminal, comprising:
a first transmitting module, configured to transmit a first message, wherein the first message comprises a message A for random access, a random access preamble, a message 3 for random access or a first payload;
a first reception module, configured to receive a second message transmitted by a network-side device; wherein the second message comprises a message B for random access, a random access response, a message 4 for random access or a second payload;
wherein the second message further comprises indication information, or, the random access response comprises the indication information;
the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

16. A network-side device, comprising a processor and a transceiver, wherein the processor is configured to control the transceiver to perform following process:
receiving a first message transmitted by a terminal, wherein the first message comprises a message A for random access, a random access preamble, a message 3 for random access or a first payload;
transmitting a second message to the terminal according to the first message; wherein the second message comprises a message B for random access, a random access response, a message 4 for random access or a second payload;
wherein the second message further comprises indication information, or, the random access response comprises the indication information;
the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

17. The network-side device according to claim 16, wherein the transceiver is further configured to:
transmit the message 4 in a case that the indication information indicates that the network-side device transmits the message 4; or,
transmit the second payload in a case that the indication information indicates that the network-side device transmits the second payload; or,
transmit the message 4 in a case that the indication information indicates the terminal to receive the message 4; or,
transmit the second payload in a case that the indication information indicates the terminal to receive the second payload.

18. The network-side device according to claim 16, wherein the transceiver is further configured to:
receive the message 3 transmitted by the terminal, in a case that the indication information indicates the terminal to transmit the message 3; or,
receive the first payload transmitted by the terminal, in a case that the indication information indicates the terminal to transmit the first payload; or,
receive the message 3 or the first payload transmitted by the terminal, in a case that the indication information indicates the terminal to fall back to the four-step random access.

19. The network-side device according to claim 18, wherein the transceiver is further configured to:
transmitting the message 4 or the second payload to the terminal according to the message 3 or the first payload transmitted by the terminal.

20. A random access device, applied to a network-side device, comprising:
a second reception module, configured to receive a first message transmitted by a terminal, wherein the first message comprises a message A for random access, a random access preamble, a message 3 for random access or a first payload;
a second transmitting module, configured to transmit a second message to the terminal according to the first message; wherein the second message comprises a message B for random access, a random access response, a message 4 for random access or a second payload;
wherein the second message further comprises indication information, or, the random access response comprises the indication information;
the indication information is for at least one of:
indicating that the network-side device transmits the message 4;
indicating that the network-side device transmits the second payload;
indicating the terminal to receive the message 4;
indicating the terminal to receive the second payload;
indicating the terminal to transmit the message 3;
indicating the terminal to transmit the first payload;
indicating the terminal to fall back to a four-step random access.

21. A computer readable storage medium having a computer program stored thereon, wherein the computer program is configured to be executed by a processor, to implement the steps of the random access method according to any one of claims 1 to 5, or the computer program is configured to be executed by a processor, to implement the steps of the random access method according to any one of claims 6 to 9.
